# EUROPEAN PATENT APPLICATION

(11) **EP 3 196 329 A1**
(43) Date of publication of application: **26.07.2017**
(21) Application number: 15858942.4
(22) Date of filing: 10.11.2015
(51) Int. Cl.: C23C 4/08, B32B 18/00, C23C 4/10, F01D 5/28, F01D 25/00, F02C 7/00

(54) **HEAT SHIELDING COATING AND TURBINE MEMBER**

(30) Priority: 11.11.2014 JP 2014228812
(71) Applicant: Mitsubishi Hitachi Power Systems, Ltd., Yokohama-shi, Kanagawa 220-8401 (JP)
(72) Inventor: KUDO Daisuke, Tokyo 108-8215 (JP); TORIGOE Taiji, Tokyo 108-8215 (JP); MASADA Junichiro, Yokohama-shi Kanagawa 220-8401 (JP); TAKAHASHI Koji, Yokohama-shi Kanagawa 2208401 (JP); UEMURA Yoshitaka, Yokohama-shi Kanagawa 2208401 (JP); OKAJIMA Yoshifumi, Tokyo 1088215 (JP); OKAYA Naotoshi, Yokohama-shi Kanagawa 2208401 (JP); ITO Eisaku, Tokyo 1088215 (JP); MEGA Masahiko, Tokyo 1088215 (JP); HORIE Shigenari, Tokyo 1088215 (JP); TANIGAWA Shuji, Tokyo 1088215 (JP); TSURU Yasuhiko, Tokyo 1088215 (JP); TSUKAGOSHI Keizo, Yokohama-shi Kanagawa 2208401 (JP); KUWABARA Masamitsu, Yokohama-shi Kanagawa 2208401 (JP)
(74) Representative: Henkel, Breuer & Partner
(86) International application number: PCT/JP2015/081581
(87) International publication number: WO 2016/076305

(57) **Abstract**

A heat shielding coating (11) comprises a bond coat layer (12) as a metal bonding layer layered on a base material (10), and a top coat layer (13) including a zirconia-based ceramic layered on the bond coat layer (12), the porosity of the top coat layer (13) being 9% or less.

## Description

### Technical Field

The present invention relates to a heat shielding coating and a turbine member.

Priority is claimed on Japanese Patent Application No. 2014-228812, filed on November 11, 2014, the content of which is incorporated herein by reference.

### Background Art

In a gas turbine, a temperature of gas to be used may be set high in order to improve efficiency of the gas turbine. A turbine member (turbine blade, turbine vane, or the like) of the gas turbine is exposed to high temperature gas. Accordingly, heat shielding coating (Thermal Barrier Coating: TBC) is performed on the surface of the turbine member. The heat shielding coating is formed by spraying a thermal spraying material such as a ceramic-based material having low thermal conductivity to a surface of the turbine member which is an objected to be sprayed. In this way, coating of the turbine member is performed by the heat shielding coating, and heat shielding property and durability of the turbine member are improved.

In the heat shielding coating, so-called erosion is generated due to various fine particles included in combustion gas, and a decrease in thickness may occur.

Patent Document 1 discloses a technology which improves erosion resistance of a heat shielding coating while maintaining low thermal conductivity. Specifically, a heat shielding coating is suggested, which includes a c/a ratio of a zirconia lattice in a range of approximately 1.0117 to approximately 1.0148, contains a zirconia-containing ceramic composition which is stabilized in a crystal phase by yttria along or a metal oxide stabilizer having a stabilizing amount in addition to the yttria, and has a void ratio having approximately 0.1 to 0.25 (that is, porosity of 10 to 25%).

### Prior Art Document

### Patent Document

[Patent Document 1] Japanese Unexamined Patent Application, First Publication No. 2005-232590

### Summary of Invention

### Problem to be solved by the Invention

In the heat shielding coating disclosed in Patent Document 1, it is known that there is a trade-off relationship between the erosion resistance and the thermal conductivity. This is because if the porosity of the heat shielding coating decreases such that the heat shielding coating is densely formed, the erosion resistance can be improved, but the thermal conductivity increases as the heat shielding coating is densely formed.

It is known that thermal cycle durability of the heat shielding coating is likely to decrease as the porosity decreases. If the thermal cycle durability decreases, peeling of the heat shielding coating or the like may occur.

That is, in the heat shielding coating, if the porosity decreases in order to improve the erosion resistance, the thermal conductivity increases, and heat shielding performance decreases. If the thickness of the heat shielding coating increases to compensate for the increase in the thermal conductivity, since the thermal cycle durability decreases, strength is insufficient, and the heat shielding coating is easily peeled off.

An object of the present invention is to provide a heat shielding coating and a turbine member in which erosion resistance can be improved while sufficient heat shielding performance and strength are secured.

### Means for Solving the Problems

According to a first aspect of the present invention, there is provided a heat shielding coating including: a bond coat layer; and a top coat layer. The bond coat layer is provided as a metal coupling layer laminated on a base material. The top coat layer is laminated on the bond coat layer and includes zirconia-based ceramic. The top coat layer has a porosity of 9% or less.

In general, thermal cycle durability of the top coat layer decreases as the porosity of ceramics decreases. Accordingly, the porosity of the ceramics used in the heat shielding coating is set to a region which is larger than 10%. However, as a result of intensive research, the inventors of the present invention have found that the thermal cycle durability increases even in a case where the porosity decreases in a region in which the porosity is 9% or less under the same conditions as those of a gas turbine being operated by combustion gas having a high temperature exceeding 800°C. That is, since it is possible to improve the thermal cycle durability by setting the porosity to 9% or less, the erosion resistance is improved by decreasing the porosity, the thickness of the top coat layer increases as the thermal cycle durability is improved, and it is possible to prevent the heat shielding performance from decreasing.

As a result, it is possible to improve the erosion resistance while securing sufficient heat shielding performance and strength.

In the heat shielding coating according to a second aspect of the present invention, in the first aspect, the porosity may be 6% or less.

According to this configuration, compared to the case where the porosity is 9%, the erosion resistance further increases, the thermal cycle durability further increases, and it is possible to further increase the thickness of the top coat layer. Accordingly, it is possible to prolong the time until the top coat layer is abraded by erosion and the base material is exposed to a high temperature. In other words, it is possible to prolong the duration for which a sufficient heat shielding effect can be obtained by the top coat layer. As a result, it is possible to lengthen the interval of maintenance, and it is possible to reduce the burden on a user.

In the heat shielding coating according to a third aspect of the present invention, in the top coat layer of the first aspect, a defect density of layered defects which extend in a direction intersecting the direction of the lamination may be 250 lines/mm² or less.

According to this configuration, it is possible to secure sufficient strength due to the decrease in the porosity and the decrease in the layered defects. Accordingly, it is possible to further improve the erosion resistance while securing sufficient heat shielding performance by increasing the thickness of the top coat layer.

In the heat shielding coating according to a fourth aspect, in the top coat layer of the third aspect, the defect density of the layered defects may be 225 lines/mm² or less.

Since it is possible to decrease the defect density of the layered defects, it is possible to improve strength. Accordingly, it is possible to further improve the erosion resistance while securing sufficient heat shielding performance.

In the heat shielding coating according to a fifth aspect, in the top coat layer of the fourth aspect, an average length of the layered defects may be 33.8 µm or less.

Since it is possible to decrease the average length of the layered defects, it is possible to improve strength. Accordingly, it is possible to further improve the erosion resistance while securing sufficient heat shielding performance.

In the heat shielding coating according to a sixth aspect of the present invention, in the top coat layer of the fourth or fifth aspect, the defect density of the layered defects may be 196 lines/mm² or less.

Since it is possible to further decrease the defect density of the layered defects, it is possible to further improve strength. Accordingly, it is possible to further improve the erosion resistance while securing sufficient heat shielding performance.

In the heat shielding coating according to a seventh aspect of the present invention, in the top coat layer of the sixth aspect, the average length of the layered defects may be 31.7 µm or less.

Since it is possible to further decrease the defect density of the layered defects, it is possible to further improve strength. Accordingly, it is possible to further improve the erosion resistance while securing sufficient heat shielding performance.

In the heat shielding coating according to an eighth aspect of the present invention, in any one of the fourth to seventh aspects, the porosity may be 8.4% or less.

It is possible to improve the strength due to the decrease in the porosity. Accordingly, it is possible to further improve the erosion resistance while securing sufficient heat shielding performance.

In the heat shielding coating according to a ninth aspect of the present invention, in the eighth aspect, the porosity may be 7.0% or less.

It is possible to further improve the strength due to the decrease in the porosity. Accordingly, it is possible to further improve the erosion resistance while securing sufficient heat shielding performance.

In the heat shielding coating according to a tenth aspect of the present invention, in any one of the third to ninth aspects, the top coat layer may include ZrO₂-8wt%Y₂O₃.

According to this configuration, it is possible to easily obtain the top coat layer having excellent erosion resistance and heat shielding performance.

In the heat shielding coating according to an eleventh aspect of the present invention, in any one of the third to ninth aspects, the top coat layer may include ZrO₂-16wt%Yb₂O₃.

According to this configuration, it is possible to easily obtain the top coat layer having excellent erosion resistance and heat shielding performance.

According to a twelfth aspect, there is provided a turbine member including the heat shielding coating according to any one of the first to tenth aspects on a surface.

According to this configuration, it is possible to prevent the turbine member from being damaged even when the turbine member is exposed to a high temperature for a long period. In addition, since it is possible to prolong a maintenance period, it is possible to decrease frequency of stopping an operation of a gas turbine.

### Effects of the Invention

According to the heat shielding coating and the turbine member, it is possible to improve erosion resistance without decreasing thermal cycle durability.

### Brief Description of Drawings

FIG. 1 is a schematic configuration view of a gas turbine according to a first embodiment of the present invention.
FIG. 2 is a perspective view showing a schematic configuration of a turbine blade according to the first embodiment of the present invention.
FIG. 3 is an enlarged sectional view showing a main portion of the turbine blade according to the first embodiment of the present invention.
FIG. 4 is a flowchart of a forming method of a turbine according to the first embodiment of the present invention.
FIG. 5 is a graph showing a depletion depth according to porosity of a top coat layer.
FIG. 6 is a graph showing thermal conductivity according to the porosity of the top coat layer.
FIG. 7 is a graph showing thermal cycle durability according to the porosity of the top coat layer.
FIG. 8 is a partial sectional view showing a configuration of a thermal cycle test device according to the first embodiment of the present invention.
FIG. 9 is a graph schematically showing a temperature change of a sample subjected to a thermal cycle test performed by the device shown in FIG. 8.
FIG. 10 is a view showing temperature measurement points of the sample subjected to the thermal cycle test of FIG. 9.
FIG. 11 is a sectional view corresponding to FIG. 3 in a modified example of the first embodiment of the present invention.
FIG. 12 is a graph showing a depletion depth according to porosity of a top coat layer.
FIG. 13 is a graph showing thermal conductivity according to the porosity of the top coat layer.
FIG. 14 is a graph showing thermal cycle durability according to the porosity of the top coat layer.
FIG. 15A is a cross-sectional picture in a case where the porosity is 8.4% and the layered defect density is 225 lines/mm² in a first example.
FIG. 15B is a view in which layered defects of FIG. 15A are traced.
FIG. 16A is a cross-sectional picture in a case where the porosity is 7.0% and the layered defect density is 196 lines/mm² in a second example.
FIG. 16B is a view in which layered defects of FIG. 16A are traced.
FIG. 17A is a cross-sectional picture in a case where the porosity is 12.9% and the layered defect density is 556 lines/mm² in a comparative example.
FIG. 17B is a view in which layered defects of FIG. 17A are traced.

### Description of Embodiments

A heat shielding coating and a turbine member according to a first embodiment of the present invention will be described with reference to the drawings.

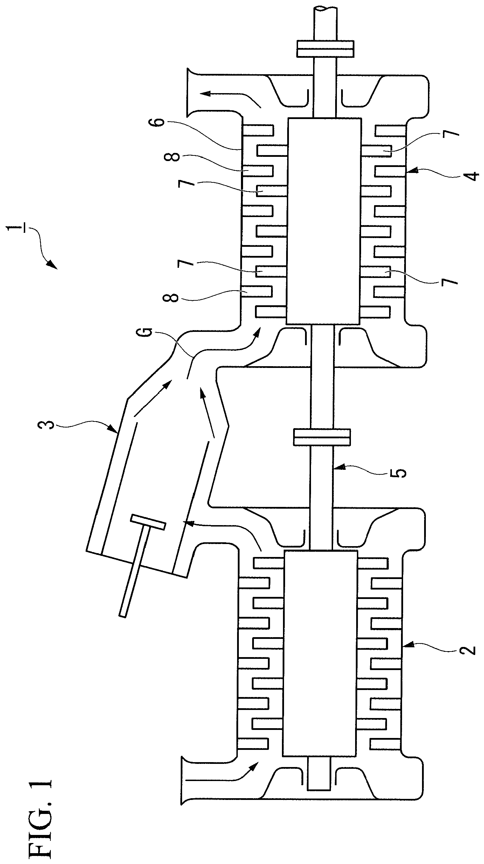

FIG. 1 is a schematic configuration view of a gas turbine according to the first embodiment of the present invention.

As shown in FIG. 1, a gas turbine according to the first embodiment includes a compressor 2, a combustor 3, a turbine body 4, and a rotor 5.

A large amount of air is taken in the compressor 2 and is compressed by the compressor 2.

In the combustor 3, a fuel is mixed with a compressed air A compressed by the compressor 2 and is combusted.

The turbine body 4 converts thermal energy of a combustion gas G introduced from the combustor 3 into rotation energy. In the turbine body 4, the combustion gas G is blown to a turbine blade 7 provided in the rotor 5, thermal energy of the combustion gas G is converted into mechanical rotation energy, and power is generated. In the turbine body 4, a plurality of turbine blades 7 are provided on the rotor 5 side, and a plurality of turbine vanes 8 are provided in a casing 6 of the turbine body 4. In the turbine body 4, the turbine blades 7 and the turbine vanes 8 are alternately arranged in an axial direction of the rotor 5.

The rotor 5 transmits a portion of rotation power of the turbine body 4 to the compressor 2 to rotate the compressor 2.

Next, in the first embodiment, the turbine blade 7 of the turbine body 4 will be described as an example of a turbine member of the present invention.

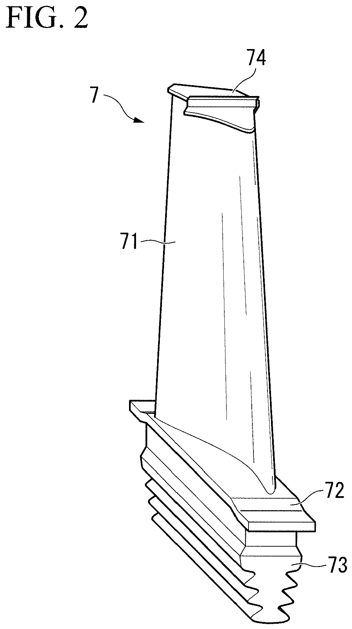

FIG. 2 is a perspective view showing a schematic configuration of the turbine blade according to the first embodiment of the present invention.

As shown in FIG. 2, the turbine blade 7 includes a turbine blade body 71, a platform 72, a blade root 73, and a shroud 74. The turbine blade body 71 is disposed in a flow path of the combustion gas G inside the casing 6 of the turbine body 4. The platform 72 is provided on a base end of the turbine blade body 71. The platform 72 defines the flow path of the combustion gas G on the base end side of the turbine blade body 71. The blade root 73 is formed to protrude from the platform 72 toward a side opposite to the turbine blade body 71. The shroud 74 is provided on the tip of the turbine blade body 71. The shroud 74 defines the flow path of the combustion gas G on the tip side of the turbine blade body 71.

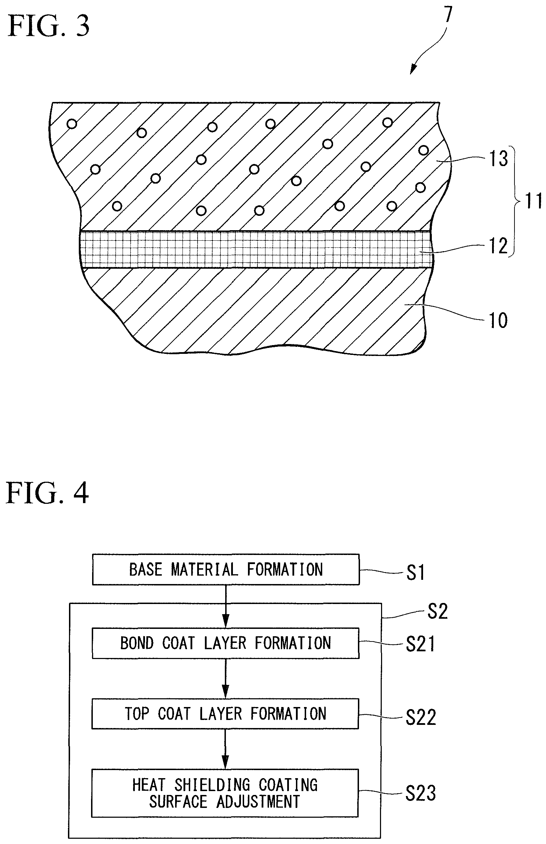

FIG. 3 is an enlarged sectional view showing a main portion of the turbine blade according to the first embodiment of the present invention.

As shown in FIG. 3, the turbine blade 7 is configured of a base material 10 and a heat shielding coating layer 11.

The base material 10 is formed of a heat resistant alloy such as a nickel (Ni) based alloy.

The heat shielding coating layer 11 is formed so as to cover the surface of the base material 10. The heat shielding coating layer 11 includes a bond coat layer 12 and a top coat layer 13.

The bond coat layer 12 prevents the top coat layer 13 from being peeled off from the base material 10. The bond coat layer 12 is a metal coupling layer having excellent corrosion resistance and oxidation resistance. For example, the bond coat layer 12 is formed by spraying metal spraying powder of MCrAlY alloy as a thermal spraying material to the surface of the base material 10. Here, "M" of the MCrAlY alloy configuring the bond coat layer 12 indicates a metal element. For example, the metal element "M" is composed of a single metal element such as nickel-cobalt (NiCo), nickel (Ni), cobalt (Co), or a combination of two or more of these elements.

The top coat layer 13 is laminated on the surface of the bond coat layer 12. The top coat layer 13 is formed by spraying a thermal spraying material containing ceramic to the surface of the bond coat layer 12. The top coat layer 13 according to the first embodiment is formed such that the porosity (occupancy of pores per unit volume) is 9% or less, and more preferably, 6% or less. It is possible to use zirconia-based ceramic as the thermal spraying material which is used when the top coat layer 13 is formed. As the zirconia-based ceramic, there is yttria-stabilized zirconia (YSZ), ytterbia stabilized zirconia (YbSZ) which is zirconia (ZrO₂) partially stabilized by ytterbium oxide (Yb₂O₃), or the like.

Next, an example of a forming method of the turbine member which forms the above-described heat shielding coating layer 11 on the surface of the base material 10 will be described.

FIG. 4 is a flowchart of a forming method of a turbine according to the first embodiment of the present invention.

As shown in FIG. 4, first, in a base material forming process S1, the base material 10 is formed to have a shape of a target turbine member, for example, the turbine blade 7. The base material 10 according to the first embodiment is formed using the above-described Ni-based alloy.

Subsequently, as a heat shielding coating method S2, a bond coat layer lamination process S21, a top coat layer lamination process S22, and a surface adjustment process S23 are sequentially performed.

In the bond coat layer lamination process S21, the bond coat layer 12 is formed on the surface of the base material 10. In the bond coat layer lamination process S21 of the first embodiment, for example, the metal spraying powder of MCrAlY alloy is sprayed to the surface of the base material 10 by a low-pressure plasma spraying method.

In the top coat layer lamination process S22, the top coat layer 13 is laminated on the bond coat layer 12. For example, in the top coat layer lamination process S22 of the first embodiment, powder of YSZ is sprayed to the bond coat layer 12 as a thermal spraying material by an Atmospheric pressure Plasma Spray (APS).

Here, in the top coat layer lamination process S22, the porosity of the top coat layer 13 is 9% or less, and more preferably, 6% or less. For example, as a method of setting the porosity of the top coat layer 13 to 9% or less, more preferably, 6% or less, there is a method of setting a distance (that is, a spraying distance) between a tip (not shown) of a nozzle of a spraying device spraying the above-described thermal spraying material and the base material 10 to be shorter than that in a case where the porosity is higher than 9%. For example, increasing the spraying current of the spraying device or the like can also decrease the porosity of the top coat layer 13. Moreover, in order to set the porosity to 9% or less, more preferably, 6% or less, a desired porosity may be obtained by controlling both the spraying distance and the spraying current.

In the surface adjustment process S23, the state of the surface of the heat shielding coating layer 11 is adjusted. Specifically, in the surface adjustment process S23, the surface of the top coat layer 13 is slightly scraped to adjust the film thickness of the heat shielding coating layer 11 or to cause the surface to be smoother. For example, it is possible to decrease a heat transfer coefficient of the turbine blade 7 by the surface adjustment process 23. In the surface adjustment process S23 of the first embodiment, the top coat layer 13 is scraped by several tens micrometers, and the surface is smoothened and the thickness is adjusted.

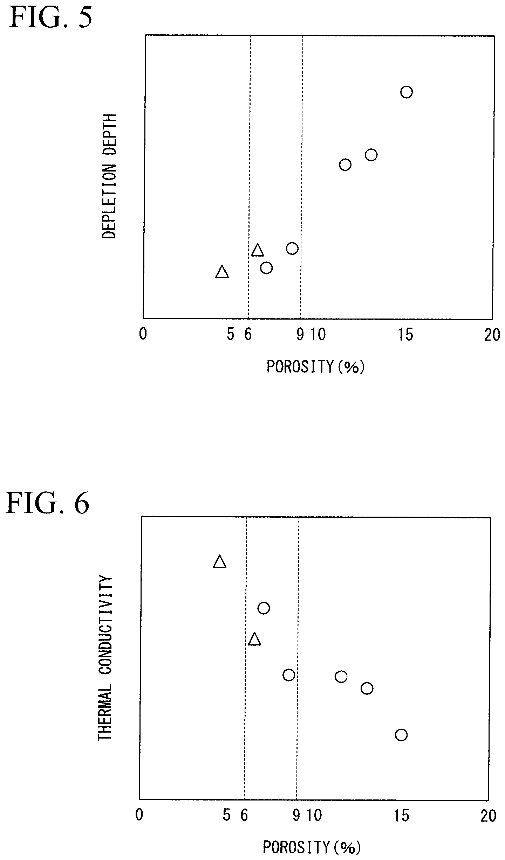

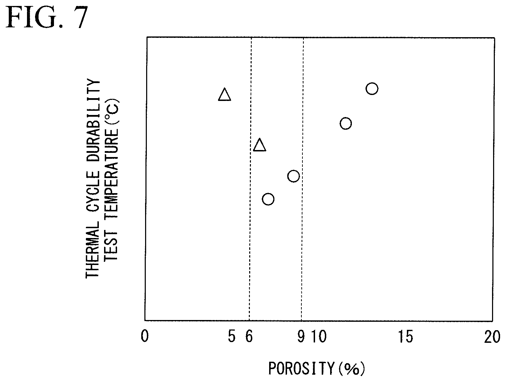

FIG. 5 is a graph showing a depletion depth according to porosity of the top coat layer. FIG. 6 is a graph showing thermal conductivity according to the porosity of the top coat layer. FIG. 7 is a graph showing thermal cycle durability according to the porosity of the top coat layer.

As shown in FIG. 5, in the above-described top coat layer 13, compared to a range in which the porosity is more than 9% (particularly, a range in which the porosity is from 10% to approximately 15%), in a range in which the porosity (%) is 9% or less, the depletion depth (mm) is greatly reduced. That is, in the region in which the porosity is 9% or less, erosion resistance is improved. Here, the depletion depth is a depth at which the top coat layer 13 is depleted in a case where an erosion test is performed on the top coat layer 13 under a predetermined condition. Here, the predetermined condition is a test condition in which at least a test temperature, an erodant speed, a type of erodant, a supply amount of erodant, and an erodant collision angle are set to constant values without being changed.

In the erosion test, similarly to the turbine blade 7, a sample in which the heat shielding coating is formed on the surface of the base material 10 is used.

As shown in FIG. 6, in the top coat layer 13, the thermal conductivity increases as the porosity (%) decreases. This means that heat shielding property decreases as the porosity decreases in a case where the top coat layer 13 has a constant thickness. Particularly, compared to a region in which the porosity is higher than 9%, in a region in which the porosity is 9% or less, the thermal conductivity greatly increases.

It has been considered that the thermal cycle durability of the top coat layer 13 decreases according to a decrease in a porosity (%) of the top coat layer 13. However, a test is conducted under the same condition as the condition of the gas turbine operated in a high temperature environment in which the temperature of the combustion gas exceeds 800°C, and a result, as shown in FIG. 7, a knowledge is obtained in which the thermal cycle durability increases in the region in which the porosity is 9% or less. The increase in the thermal cycle durability is more remarkable in a case where the porosity is 6% or less. That is, in the environment of the gas turbine which uses a very high combustion gas G, by setting the porosity to 9% or less, more preferably, 6% or less, sufficient strength is obtained even when the thickness of the top coat layer 13 increases as the thermal cycle durability increases. Accordingly, it is possible to more improve the heat shielding property of the top coat layer 13 according to the increase in thickness.

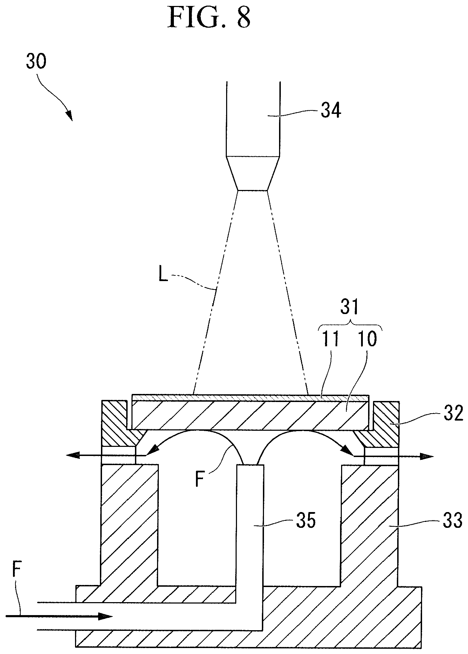

FIG. 8 is a partial sectional view showing a configuration of a thermal cycle test device according to the first embodiment of the present invention.

As shown in FIG. 8, in a thermal cycle test device 30, a sample 31 in which the heat shielding coating layer 11 is formed on the base material 10 is disposed on a sample holder 32 placed on a main body portion 33 such that the heat shielding coating layer 11 is positioned outside, and the sample 31 is heated from the heat shielding coating layer 11 side by irradiating the sample 31 with laser light from a CO₂ laser device 34. The sample 31 is heated by the CO₂ laser device 34, and simultaneously, the sample 31 is cooled from the rear surface side by a gas flow F ejected from a tip of a cooling nozzle 35 which penetrates the main body portion 33 and is disposed at a position opposite to the rear surface side of the sample 31 inside the main body portion 33.

According to the thermal cycle test device having the above-described configuration, it is possible to easily form a temperature gradient in the inside of the sample 31, and to perform an evaluation suitable for the use environment when applied to a high temperature part such as a gas turbine member.

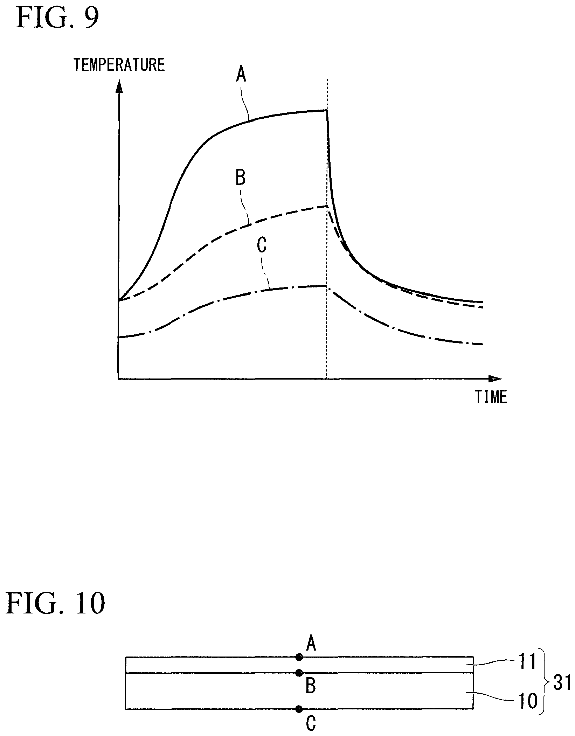

FIG. 9 is a graph schematically showing a temperature change of a sample subjected to a thermal cycle test performed by the device shown in FIG. 8. FIG. 10 is a view showing temperature measurement points of the sample subjected to the thermal cycle test of FIG. 9. Curves A to C shown in FIG. 9 correspond to temperature measurement points A to C in the sample 31 shown in FIG. 10.

As shown in FIG. 9, according to the thermal cycle test device shown in FIG. 8, it is possible to heat the sample 31 such that in the sample 31, a temperature of a surface (A) of the heat shielding coating layer 11, a temperature of a boundary surface (B) between the heat shielding coating layer 11 and the base material 10, and a temperature of a rear surface side (C) of the base material 10 are lowered in this order. Accordingly, for example, a temperature condition similar to that of an actual gas turbine can be set by setting the temperature of the surface of the heat shielding coating layer 11 to a high temperature of 1200°C or more and the temperature of the boundary surface between the heat shielding coating layer 11 and the base material 10 to 800 to 900°C. The heating temperature and the temperature gradient by the thermal cycle test device can be easily set to a desired temperature condition by adjusting an output and a gas flow F of the CO₂ laser device 34.

Here, in the above-described graph shown in FIG. 7, a thermal cycle durability test temperature (°C) shown on a vertical axis is a temperature at which peeling occurs in the heat shielding coating layer 11 when it is repeatedly heated for 1000 cycles. In the thermal cycle test of the first embodiment, in a state where the maximum surface temperature (the maximum temperature on the surface of the heat shielding coating layer 11) is set to 1300°C and the maximum boundary surface temperature (the maximum temperature of the boundary surface between the heat shielding coating layer 10 and the base material 11) is set to 950°C, the heating is repeatedly performed. In this case, a heating time is set to 3 minutes and a cooling time is set to 3 minutes (setting is performed such that the surface temperature at the time of cooling is 100°C or less).

Therefore, according to the heat shielding coating layer 11 of the above-described first embodiment, it is possible to improve the thermal cycle durability by setting the porosity of the top coat layer 13 to 9% or less. Accordingly, the thickness of the top coat layer 13 increases as the thermal cycle durability is improved while the erosion resistance is improved due to the decrease in the porosity, and it is possible to prevent the heat shielding performance from decreasing. As a result, it is possible to improve the erosion resistance while securing sufficient heat shielding performance and strength.

Compared to the case where the porosity is 9%, in a case where the porosity is set to 6% or less, it is possible to further increase the erosion resistance of the top coat layer 13, to further increase the thermal cycle durability, and to further increase the thickness of the top coat layer 13. Accordingly, it is possible to prolong the time until the top coat layer is abraded by erosion and the base material 10 is exposed to a high temperature. In other words, it is possible to prolong the duration for which a sufficient heat shielding effect can be obtained by the top coat layer 13. As a result, it is possible to lengthen the interval of maintenance, and it is possible to reduce the burden on a user.

In addition, according to the turbine blade 7 which is the turbine member of the above-described first embodiment, it is possible to prevent the turbine blade 7 from being damaged even in a case where the turbine blade 7 is exposed to a high temperature for a long period. In addition, since it is possible to prolong a maintenance period, it is possible to decrease the frequency of stopping an operation of the gas turbine.

### (Modified Example of First Embodiment)

The present invention is no limited to the above-described first embodiment, and includes various modifications which are applied to the above-described first embodiment within a range which does not depart from the gist of the present invention. That is, the specific shapes, configurations, and the like described in the first embodiment are only example, and can be appropriately modified.

The bond coat layer 12 or the top coat layer 13 may be formed by a method other than the above-described first embodiment. For example, low pressure plasma spraying may be used as electrical thermal spraying other than the atmospheric pressure plasma spraying, and flame spraying method and high speed flame spraying may be used as gas type spraying. The layers may be formed by a method other than the spraying method, and for example, an electron beam physical vapor deposition method may be used.

In addition, in the above-described configuration, the turbine blade 7 is described as an example of the turbine member. However, other turbine member, for example, the present invention may be applied to the turbine vane 8 or a member such as the nozzle or a tubular body configuring the combustor 3 in the gas turbine 1.

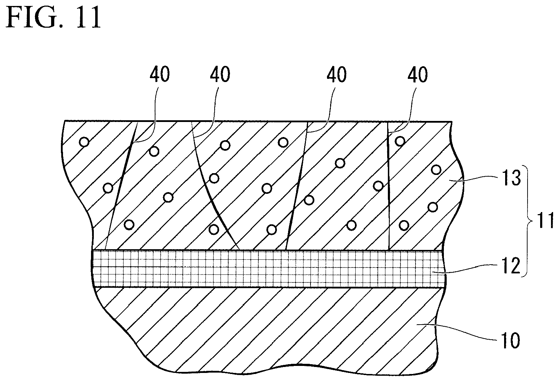

When the top coat layer 13 is formed in the above-described first embodiment, the spraying distance is gradually shortened, and in this case, as shown in FIG. 11, so-called longitudinal cracks may be formed.

In this way, in a case where the longitudinal cracks are formed, since the Young's modulus of the top coat layer 13 decreases and thermal stress decreases, it is possible to further improve the thermal cycle durability.

### (Second Embodiment)

Next, a heat shielding coating and a turbine member of a second embodiment of the present invention will be described with reference to the drawings. The second embodiment is different from the first embodiment in that conditions of the layered defects are added to the first embodiment. Accordingly, the same reference numerals are assigned to the same portions as those of the first embodiment, and overlapping descriptions are omitted.

The gas turbine 1 of the second embodiment includes the compressor 2, the combustor 3, the turbine body 4, and the rotor 5. The turbine blade 7 includes the turbine blade body 71, the platform 72, the blade root 73, and the shroud 74.

The turbine blade 7 is configured of the base material 10 and the heat shielding coating layer 11. The heat shielding coating layer 11 includes the bond coat layer 12 and the top coat layer 13.

Next, a forming method of the turbine member of the second embodiment which forms the heat shielding coating layer 11 on the surface of the base material 10 will be described. The forming method of the turbine member of the second embodiment will be described with reference to FIG. 4 of the first embodiment.

As shown in FIG. 4, first, in the base material forming process S1, the base material 10 is formed to have a shape of a target turbine member, for example, the turbine blade 7. Similarly to the first embodiment, the base material 10 according to the second embodiment is formed using the above-described Ni(nickel)-based alloy.

Subsequently, as the heat shielding coating method S2, the bond coat layer lamination process S21, the top coat layer lamination process S22, and the surface adjustment process S23 are sequentially performed.

In the bond coat layer lamination process S21, the bond coat layer 12 is formed on the surface of the base material 10. In the bond coat layer lamination process S21 of the second embodiment, for example, the metal spraying powder of MCrAlY alloy is sprayed to the surface of the base material 10 by low-pressure plasma spraying.

In the top coat layer lamination process S22, the top coat layer 13 is laminated on the bond coat layer 12. For example, in the top coat layer lamination process S22 of the second embodiment, powder of yttria-stabilized zirconia (YSZ) is sprayed to the bond coat layer 12 as a thermal spraying material by an Atmospheric pressure Plasma Spray (APS). Here, as the YSZ in the second embodiment, it is possible to use ZrO₂-8wt%Y₂O₃ or ZrO₂-16wt%Yb₂O₃ which is partially stabilized zirconia.

Here, in the top coat layer lamination process S22, a layered defect density of the top coat layer 13 is set to 250 lines/mm². In this embodiment, the layered defect density is set to 225 lines/mm², and more preferably, 196 lines/mm².

In the top coat layer process 22, the porosity of the top coat layer 13 is set to 9% or less. In this embodiment, the porosity is set to 8.4% or less, and more preferably, 7.0% or less.

As the method of setting the porosity of the top coat layer 13 to 9% or less and the layered defect density of the top coat layer 13 to 250 lines/mm² or less, for example, there is a method of increasing the spraying current of the spraying device. In this case, similarly to the first embodiment, the distance (that is, the spraying distance) between the tip (not shown) of the nozzle of the spraying device spraying the above-described thermal spraying material and the base material 10 may be shorter than that in the case where the layered defect density is higher than 250 lines/mm².

In the surface adjustment process S23, the state of the surface of the heat shielding coating layer 11 is adjusted. Specifically, in the surface adjustment process S23, the surface of the top coat layer 13 is slightly scraped to adjust the film thickness of the heat shielding coating layer 11 or to cause the surface to be smoother. For example, it is possible to decrease a heat transfer coefficient of the turbine blade 7 by the surface adjustment process 23. Similarly to the first embodiment, in the surface adjustment process S23 of the second embodiment, the top coat layer 13 is scraped by several tens micrometers, and the surface is smoothened and the thickness is adjusted.

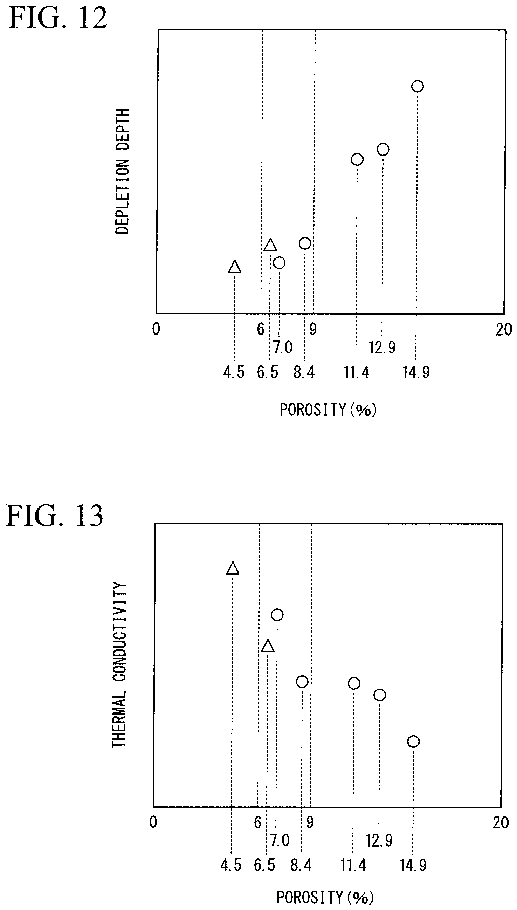

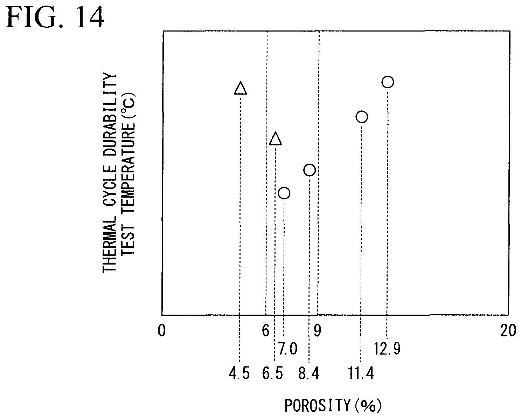

FIG. 12 is a graph showing the depletion depth according to the porosity of the top coat layer. FIG. 13 is a graph showing the thermal conductivity according to the porosity of the top coat layer. FIG. 14 is a graph showing the thermal cycle durability according to the porosity of the top coat layer.

In the second embodiment, FIGS. 12 to 14 show cases where the porosities are "4.5%", "6.5%", "7.0%", "8.4%", "11.4%", "12.9%", and "14.9%".

Here, in the case where the porosity is 8.4%, the layered defect density (lines/mm²) is 225 lines/mm², and a layered defect average length (µm) is 33.8 µm. In the case where the porosity is 7.0%, the layered defect density (lines/mm²) is 196 lines/mm², and the layered defect average length (µm) is 31.7 µm.

Moreover, in the case where the porosity is 12.9%, the layered defect density (lines/mm²) is 556 lines/mm², and the layered defect average length (µm) is 37.9 µm.

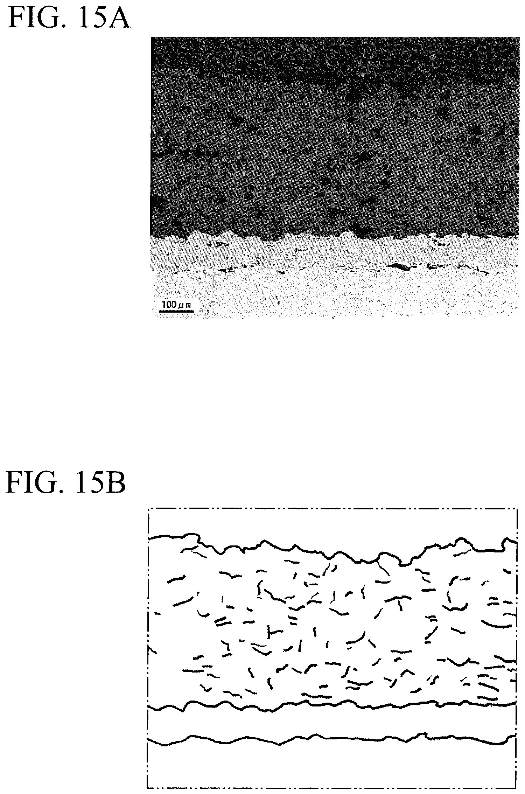

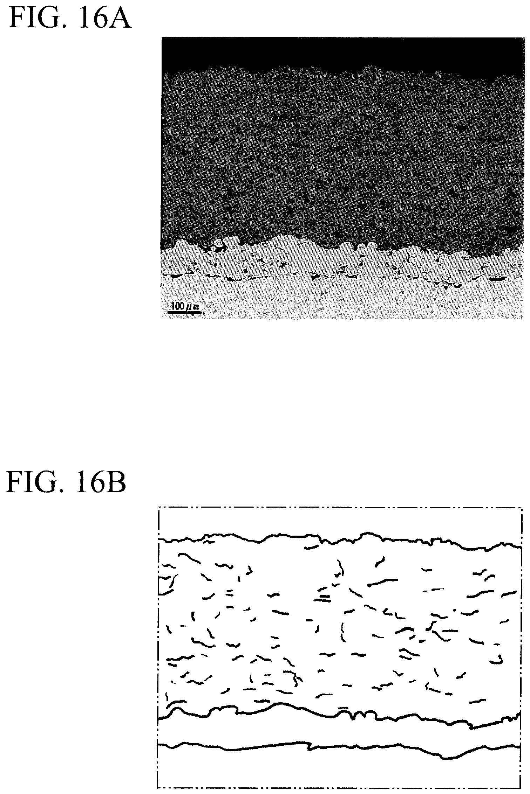

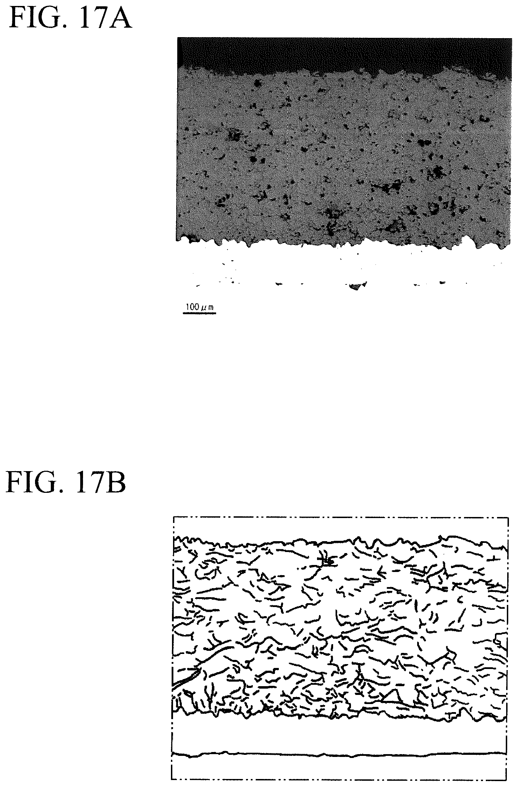

FIG. 15A is a cross-sectional picture in a case where the porosity is 8.4% and the layered defect density is 225 lines/mm² in a first example, and FIG. 15B is a view in which layered defects of FIG. 15A are traced. FIG. 16A is a cross-sectional picture in a case where the porosity is 7.0% and the layered defect density is 196 lines/mm² in a second example, and FIG. 16B is a view in which layered defects of FIG. 16A are traced. FIG. 17A is a cross-sectional picture in a case where the porosity is 12.9% and a layered defect density is 556 lines/mm² in a comparative example, and FIG. 17B is a view in which layered defects of FIG. 17A are traced.

The layered defects formed in the top coat layer 13 are different from pores. The layered defects are mainly formed as fine cracks which extend in a lateral direction intersecting the lamination direction of the top coat layer 13. The layered defects are formed on the entire region of the top coat layer 13. The number per unit area of the layered defects is the "layered defect density", and the average value of the lateral lengths of the layered defects is the "layered defect average length".

As shown in FIG. 12, compared to the case where the porosity of the above-described top coat layer 13 is 11.4%, 12.9%, and 14.9%, in the case where the porosity (%) of the top coat layer 13 is 8.4%, 6.5%, 7.0%, and 4.5% which are 9% or less, the depletion depth (mm) is greatly reduced. It is considered that this is because the porosity decreases and adhesion between spray particles increases by improving a molten state of spray particles, and fine cracks (layered defects) of a film in a peeling direction (lateral direction) are decreased to a very low level.

That is, in a region in which the porosity is 9% or less, specifically, 8.4% or less, erosion resistance is improved. Similarly to the first embodiment, the depletion depth is a depth at which the top coat layer 13 is depleted in a case where an erosion test is performed on the top coat layer 13 under a predetermined condition. The predetermined condition is a test condition in which at least the test temperature, the erodant speed, the type of erodant, teh supply amount of erodant, and the erodant collision angle are set to constant values without being changed. In the erosion test, similarly to the turbine blade 7, a sample in which the heat shielding coating is formed on the surface of the base material 10 is used.

In the present erosion test, evaluation is performed by a high-temperature and high-speed erosion test device simulating an actual device. This device is a specific device which is shown in Mitsubishi Heavy Industries Technical Review Vol. 52 No.2 (2015). The high-temperature and high-speed erosion test device can reproduce an environment which is very close to an operation environment of a heat shielding coating (TBC; Thermal Barrier Coating) of an actual gas turbine, and if the present device is not used, it is difficult to correctly evaluate the heat shielding coating. In general, in most cases, the erosion test is performed at room temperature, and a high gas flow rate which can be obtained by the present device may not be obtained under a high temperature environment.

As shown in FIG. 13, as described in the first embodiment, in the top coat layer 13, the thermal conductivity increases as the porosity (%) decreases. This means that in the case where the top coat layer 13 has a constant thickness, the porosity decreases, and the heat shielding property decreases as the layered defect density decreases.

Compared to a comparative example in which the porosity is higher than 8.4% (the layered defect density is more than 225 lines/mm² and the layered defect average length is longer than 33.8 µm), in the case where the porosity is 8.4%, 7.0%, 6.5%, and 4.5% which are 9% or less, the thermal conductivity further increases. It is considered that this is because melting of particles proceeds during spraying, the porosity decreases, and the layered defects which are defects in the lateral direction of spraying film melting are significantly decreased.

It has been considered that the thermal cycle durability of the top coat layer 13 decreases according to a decrease in a porosity (%) of the top coat layer 13. However, a test is conducted under the same condition as the condition of the gas turbine operated in a high temperature environment in which the temperature of the combustion gas exceeds 800°C and the gas flow rate is 100 m/s or more similarly to an actual device, and a result, as shown in FIG. 14, a knowledge is obtained in which the thermal cycle durability increases in the region in which the porosity is 9% or less, ad more specifically, in a case where the porosity is 8.4% or less (the layered defect density is 225 lines/mm² or less and the layered defect average length is 33.8 µm or less).

The increase in the thermal cycle durability is more remarkable in a case where the porosity is 7.0% (the layered defect density is 196 lines/mm² or less and the layered defect average length is 31.7 µm or less). That is, in the environment of the gas turbine which uses a very high combustion gas G, by setting the porosity to 8.4% or less, more preferably, 7.0% or less, the layered defect density decreases, the layered defect average length decreases, and it is possible to increase the thermal cycle durability. Accordingly, sufficient strength is obtained even in a case where the thickness of the top coat layer 13 increases as the thermal cycle durability increases.

It is considered that this is because melting of particles proceeds during spraying, the porosity decreases, and the layered defects are significantly decreased.

The decrease in the porosity and the decreases in the layered defects are highly effective to the increase in the thickness, and it could be found that sufficient durability is obtained and a remarkably effective erosion resistance is obtained even in a case where the thickness increases more than the increase in the thermal conductivity.

Therefore, according to the second embodiment, by setting the porosity of the top coat layer 13 to 9% or less and the layered defect density to 250 lines/mm² or less, it is possible to improve the heat shielding property of the top coat layer 13. In addition, by setting the porosity to 8.4% or less, more preferably, 7.0%, and the layered defect density to 225 lines/mm², and more preferably to 196 lines/mm², it is possible to improve the heat shielding property.

In addition, by setting the porosity to 8.4% or less, more preferably, 7.0%, and the layered defect average length to 33.8 µm or less, more preferably, 31.7 µm or less, it is possible to improve the heat shielding property.

In addition, it is possible to increase the thickness due to the decrease in the porosity and the decreases in the layered defects. As a result, it is possible to secure sufficient durability even when the thickness significantly increases so as to cause the thermal conductivity to be more than the increase in the thermal conductivity generated due to the decrease in the porosity and the decreases in the layered defects.

The erosion resistance is improved, the thickness of the top coat layer 13 increases, and it is possible to improve thermal conductivity. Accordingly, it is possible to improve reliability over a long period due to both effects of the erosion resistance and the thermal conductivity.

### Industrial Applicability

The present invention can be applied to a heat shielding coating and a turbine member. According to a heat shielding coating and a turbine member to which the present invention is applied, it is possible to improve the erosion resistance without decreasing the thermal cycle durability.

### Reference Signs List

- 1:: gas turbine
- 2:: compressor
- 3:: combustor
- 4:: turbine body
- 5:: rotor
- 6:: casing
- 7:: turbine blade
- 8:: turbine vane
- 10:: base material
- 11:: heat shielding coating layer
- 12:: bond coat layer
- 13:: top coat layer
- 30:: thermal cycle test device
- 31:: sample
- 32:: sample holder
- 33:: main body portion
- 40:: longitudinal crack
- 71:: turbine blade body
- 72:: platform
- 73:: blade root
- 74:: shroud

## Claims

1. A heat shielding coating, comprising:
a bond coat layer as a metal coupling layer laminated on a base material; and
a top coat layer which is laminated on the bond coat layer and includes zirconia-based ceramic,
wherein the top coat layer has a porosity of 9% or less.

2. The heat shielding coating according to claim 1,
wherein the porosity is 6% or less.

3. The heat shielding coating according to claim 1,
wherein in the top coat layer, a defect density of layered defects which extend in a direction intersecting the direction of the lamination is 250 lines/mm² or less.

4. The heat shielding coating according to claim 3,
wherein in the top coat layer, the defect density of the layered defects is 225 lines/mm² or less.

5. The heat shielding coating according to claim 4,
wherein in the top coat layer, an average length of the layered defects is 33.8 µm or less.

6. The heat shielding coating according to claim 4 or 5,
wherein in the top coat layer, the defect density of the layered defects is 196 lines/mm² or less.

7. The heat shielding coating according to claim 6,
wherein in the top coat layer, the average length of the layered defects is 31.7 µm or less.

8. The heat shielding coating according to any one of claims 4 to 7,
wherein the porosity is 8.4% or less.

9. The heat shielding coating according to claim 8,
wherein the porosity is 7.0% or less.

10. The heat shielding coating according to any one of claims 3 to 9,
wherein the top coat layer includes ZrO₂-8wt%Y₂O₃.

11. The heat shielding coating according to any one of claims 3 to 9,
wherein the top coat layer includes ZrO₂-16wt%Yb₂O₃.

12. A turbine member comprising the heat shielding coating according to any one of claims 1 to 11 on a surface.
